# EUROPÄISCHE PATENTSCHRIFT

(11) **EP 3 112 720 B1**
(45) Veröffentlichungstag und Bekanntmachung des Hinweises auf die Patenterteilung: **04.03.2020**
(21) Anmeldenummer: 16174683.9
(22) Anmeldetag: 16.06.2016
(51) Int. Cl.: F16F 9/06

(54) **TRENNKOLBEN UND EINROHR-GASDRUCKSTOSSDÄMPFER MIT EINEM SOLCHEN TRENNKOLBEN**
SEPARATING PISTON AND SINGLE CYLINDER GAS SHOCK ABSORBER WITH SUCH A SEPARATING PISTON
PISTON DE SÉPARATION ET AMORTISSEUR DE CHOC DE PRESSION DE GAZ À UN TUBE AVEC UN TEL PISTON DE SÉPARATION

(30) Priorität: 01.07.2015 DE 102015008401
(43) Veröffentlichungstag der Anmeldung: 04.01.2017
(73) Patentinhaber: Carl Freudenberg KG, 69469 Weinheim (DE)
(72) Erfinder: Emig, Jürgen, 64689 Grasellenbach (DE); Watling, Simon, Blyth, Northumberland, NE242PR (GB); Billany, Matt, Washington, Tyne and Wear NE38 8LS (GB); Waddell, Paul, Noth Shields, Tyne and Wear, NE30 3DF (GB); Dixon, Ross, Newcastle Upon Tyne, Tyne and Wear, NE12 8NS (GB)

(56) Entgegenhaltungen:
- WO-A2-98/00653
- DE-A1-102008 060 515
- DE-A1-102011 083 744
- DE-C1- 19 531 794
- JP-A- S63 280 941

## Beschreibung

### Technisches Gebiet

Die Erfindung betrifft einen Trennkolben, umfassend einen Stützkörper aus einem zähharten Werkstoff und eine schwingfähige Membran aus einem gummielastischen Werkstoff, die im Wesentlichen kreisförmig ausgebildet ist, wobei der Stützkörper als Führungsring ausgebildet ist, wobei der Führungsring außenumfangsseitig eine Führungsfläche aufweist, wobei der Führungsring die Membran außenumfangsseitig und flüssigkeitsdicht umschließt und wobei der Führungsring zwei Stirnseiten aufweist sowie einen Einrohr-Gasdruckstoßdämpfer, der einen solchen Trennkolben umfasst.

### Stand der Technik

Einrohr-Gasdruckstoßdämpfer, die einen Trennkolben umfassen, sind allgemein bekannt.
Einrohr-Gasdruckstoßdämpfer gelangen zum Beispiel in Kraftfahrzeugen zur Anwendung, um Schwingungen von gefederten Massen möglichst rasch abklingen zu lassen. Einrohr-Gasdruckstoßdämpfer sind dann Bestandteile des Fahrwerks, Beispiele für gefederte Massen sind die Räder des Kraftfahrzeugs. Vorbekannte Einrohr-Gasdruckstoßdämpfer umfassen einen Arbeitszylinder mit einem Gasreservoir und einem Ölreservoir, wobei das Gasreservoir und das Ölreservoir in axialer Richtung benachbart zueinander angeordnet sind. Der Trennkolben ist in axialer Richtung zwischen den beiden Reservoirs angeordnet und trennt diese mediumsdicht voneinander. Der Trennkolben ist in axialer Richtung im Arbeitszylinder schwimmend geführt. Im Ölreservoir ist ein mit einer Kolbenstange ortsfest verbundener Arbeitskolben angeordnet, der in axialer Richtung hin und her beweglich ist.
Die Dämpfung von in den Einrohr-Gasdruckstoßdämpfer eingeleiteten Schwingungen erfolgt dadurch, dass der Arbeitskolben mittels der Kolbenstange innerhalb des Ölreservoirs in axialer Richtung hin und her bewegt wird, wobei das im Ölreservoir befindliche Öl von einer Stirnseite des Arbeitskolbens durch im Arbeitskolben angeordnete Dämpfungsventile hindurch zur anderen Stirnseite des Arbeitskolbens strömt. Die Dämpfungsventile setzen dem durch den Arbeitskolben hindurchfließenden Öl einen Widerstand entgegen. Dadurch wird eine Druckdifferenz stirnseitig beiderseits des Arbeitskolbens erzeugt, die der sich relativ zum Arbeitszylinder bewegenden Kolbenstange eine Dämpfungskraft entgegensetzt.
Innerhalb des Gasreservoirs ist ein vorgespanntes Gas, zum Beispiel Stickstoff, angeordnet. Innerhalb des Arbeitszylinders herrscht ein Basisinnendruck von etwa 20 bis 30 bar, wobei im statischen Zustand des Einrohr-Gasdruckstoßdämpfers dieser Basisinnendruck axial beiderseits des Trennkolbens anliegt. Das Gasreservoir hat die Aufgabe, dafür zu sorgen, dass beim Einfedern des Arbeitskolbens axial in Richtung des Gasreservoirs die Ölseite auf der dem Gasreservoir axial abgewandten Seite des Arbeitskolbens nicht abreißt und die Gefahr von Kavitation auf ein Minimum begrenzt ist. Durch das Vorsehen eines Gasreservoirs, das durch den Trennkolben vom Ölreservoir mediumsdicht getrennt ist, ergeben sich verbesserte Gebrauchseigenschaften des Einrohr-Gasdruckstoßdämpfers im Vergleich zu einem reinen Öldämpfer, der ein solches Gasreservoir nicht aufweist. Ein Aufschäumen des Öls wird durch die zuvor beschriebene Einrohr-Gasdruck-Technik wirkungsvoll verhindert. Auch bei einer hohen Beanspruchung eines Einrohr-Gasdruckstoßdämpfers stehen die vollen Dämpfkräfte zur Verfügung. Das Gasreservoir kann als Gaspolster verstanden werden, das einen Volumenausgleich beim Einfahren der Kolbenstange übernimmt.

Aus der DE 10 2008 060 515 A1 ist ein Trennkolben gemäß Oberbegriff von Patentanspruch 1 bekannt.
Der Stützkörper ist kreisringförmig und im Querschnitt betrachtet quaderförmig ausgebildet und kann mit einem Material, wie zum Beispiel Teflonharz, veredelt sein, das in der Lage ist, die Reibung zwischen dem Stützkörper und einem Arbeitszylinder eines Stoßdämpfers zu verringern.
Die Membran kann zum Beispiel aus Gummi bestehen, wobei der äußere Umfang der Membran an einer Innenfläche des Stützkörpers festgelegt ist. Die Membran ist im Wesentlichen rollbalgförmig ausgebildet.

Aus der JP 63-280941 A ist ein Trennkolben eines Einrohr-Stoßdämpfers bekannt, wobei der Trennkolben einen Stützkörper aus einem zähharten Werkstoff und eine schwingfähige Membran aus einem gummielastischen Werkstoff umfasst, wobei die Membran im Wesentlichen kreisförmig ausgebildet ist.
Außenumfangseitig ist der Stützkörper vollständig vom gummielastischen Werkstoff der Membran umschlossen, wobei aus dem gummielastischen Werkstoff zumindest zwei Hauptdichtlippen, bevorzugt zusätzlich eine Staublippe gebildet sind. Der Trennkolben ist durch die beiden Hauptdichtlippen an der Innenumfangsfläche des Arbeitszylinders des Stoßdämpfers abgestützt und durch diese, aus gummielastischem Werkstoff bestehenden Hauptdichtlippen an der Innenumfangsfläche geführt.

Aus der DE 10 2011 038 744 A1 sind eine Dichtung und ein Einrohrdämpfersystem bekannt, umfassend einem Trennkolben, der ähnlich dem Trennkolben aus der zuvor beschriebenen JP 63-280941 A ausgebildet ist.
Auch dieser Trennkolben umfasst einen Stützkörper aus einem zähharten Werkstoff und eine schwingfähige Membran aus einem gummielastischen Werkstoff, die im Wesentlichen kreisförmig ausgebildet ist. Der Trennkolben ist auch in diesem Fall durch Dichtlippen aus gummielastischem Werkstoff im Arbeitszylinder des Stoßdämpfers geführt.

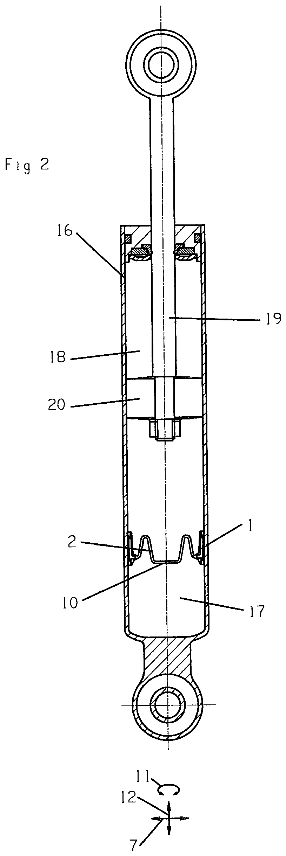

Aus der WO 98/00653 A2 ist eine regelbare Schwingungseinrichtung bekannt, die regelbare, lineare und rotatorische Fluiddämpfer umfasst, insbesondere magnetorheologische Fluidvorrichtungen mit einem magnetorheologischen Fluid, das heißt ein Medium mit magnetischen weichen Partikeln, die in einem Trägerfluid suspendiert sind.
Die regelbare Schwingungseinrichtung umfasst einen Körper mit einem inneren Hohlraum, einer Kolbenstange, einem Kolben, der mit der Kolbenstange verbunden ist und den inneren Hohlraum in eine obere Kammer und eine untere Kammer unterteilt, einem Fluid, das innerhalb der oberen und der unteren Kammer enthalten ist und ein elektrisch steuerbares Ventil, das den Fluss des Fluids zwischen der oberen und der unteren Kammer steuert. Die Schwingungseinrichtung umfasst außerdem einen Schaltkreis zum Übertragen eines elektrischen Starkstroms an das elektrisch steuerbare Ventil, wobei der Schaltkreis einen Leiter aufweist, der sich in den inneren Hohlraum hineinerstreckt. Außerdem umfasst die Schwingungseinrichtung Mittel zum Verbinden des Schaltkreises mit einem niedrigen Potential sowie Elastomermittel zum flüssigkeitsdichten Abdichten des elektrischen Leiters. Das Elastomermittel ist zwischen der Kolbenstange und einem Abschnitt des Kolbens zusammengedrückt, so dass das Elastomermittel in engen Kontakt mit dem elektrischen Leiter und einem anderen Abschnitt des Kolbens kommt. Die regelbare Schwingungseinrichtung umfasst außerdem einen Trennkolben mit einem Stützkörper aus einem zähharten Werkstoff und einer schwingfähigen Membran aus einem gummielastischen Werkstoff, die im Wesentlichen kreisförmig ausgebildet ist. Der Stützkörper ist kreisringförmig ausgebildet und weist eine außenumfangsseitig umlaufende Nut auf, in der zur Abdichtung gegenüber einem Arbeitszylinder eines Stoßdämpfers ein O-Ring angeordnet ist.
Der Stützkörper ist als Führungsring ausgebildet und weist eine außenumfangsseitig angeordnete Führungsfläche auf. Die Membran ist stirnseitig einerseits des Stützkörpers mit diesem verbunden und erstreckt sich rollbalgförmig in den Innenraum, der durch die Innenumfangsfläche des Stützkörpers begrenzt ist (Figur 2).

### Darstellung der Erfindung

Der Erfindung liegt die Aufgabe zu Grunde, einen Trennkolben und einen Einrohr-Gasdruckstoßdämpfer, der einen solchen Trennkolben umfasst, derart weiterzuentwickeln, dass durch den Trennkolben höherfrequente und kleinamplitudige Schwingungen der Kolbenstange und des ortsfest damit verbundenen Arbeitskolbens im Inneren des Arbeitszylinders aufgenommen werden, ohne dass sich dabei der Trennkolben innerhalb des Arbeitszylinders in axialer Richtung hin und her bewegt ,dass der Trennkolben ein gutes Ansprechverhalten und eine hohe Lebensdauer des Stoßdämpfers bewirkt und dass zur Anwendung gelangende Dichtlippen in radialer Richtung ausreichend stark an einen Arbeitszylinder angepresst werden und eine Relaxation der Dichtlippen minimiert wird.

Diese Aufgabe wird erfindungsgemäß mit den Merkmalen der Ansprüche 1 und 8 gelöst.
Auf vorteilhafte Ausgestaltungen nehmen die Unteransprüche Bezug.
Zur Lösung der Aufgabe ist es vorgesehen, dass der Führungsring stirnseitig beiderseits mit jeweils zumindest einer sich in radialer Richtung nach außen erstreckenden Dichtlippe verbunden ist, dass der Führungsring stirnseitig beiderseits jeweils eine Armierung für die Dichtlippen aufweist, und dass die Armierungen durch sich in axialer Richtung erstreckende Vorsprünge gebildet sind.

Bevorzugt sind die Vorsprünge einstückig ineinander übergehend und materialeinheitlich mit dem Führungsring ausgebildet.
Ein Einrohr-Gasdruckstoßdämpfer, bei dem ein solcher Trennkolben zur Anwendung gelangt, umfasst einen Arbeitszylinder mit einem Gasreservoir und einem Ölreservoir, wobei das Gasreservoir und das Ölreservoir in axialer Richtung benachbart zueinander angeordnet und durch den Trennkolben mediumsdicht voneinander getrennt sind, wobei der Trennkolben im Arbeitszylinder mittels einer Führungsfläche in axialer Richtung schwimmend geführt ist und wobei im Ölreservoir ein mit einer Kolbenstange ortsfest verbundener Arbeitskolben in axialer Richtung hin und her beweglich angeordnet ist.
Hierbei ist von Vorteil, dass durch die schwingfähige Membran, die einen Bestandteil des Trennkolbens bildet, höherfrequente und kleinamplitudige Schwingungen aufgenommen werden. Unter kleinamplitudigen und hochfrequenten Schwingungen werden in diesem Zusammenhang Schwingungen verstanden, mit einer Amplitude von wenigen Millimetern und einer Frequenz von > 10 Hz.
Solche Schwingungen werden durch die Kolbenstange und den ortsfest mit der Kolbenstange verbunden Arbeitskolben zum Beispiel dann in den Arbeitszylinder eines Einrohr-Gasdruckstoßdämpfers eingeleitet, wenn ein mit Einrohr-Gasdruckstoßdämpfern ausgestattetes Kraftfahrzeug über ebene Fahrbahnen mit guter Oberfläche, zum Beispiel über Autobahnen, gefahren wird. Während der Fahrt werden die zuvor genannten höherfrequenten und kleinamplitudigen Schwingungen mittels der Kolbenstange und des Arbeitskolbens in das Ölreservoir des Arbeitszylinders eingeleitet.
Würde bei einem Einrohr-Gasdruckstoßdämpfer ein Trennkolben zur Anwendung gelangen, wie er aus dem Stand der Technik bekannt ist, nämlich ein Trennkolben, der durch einen starren metallischen Körper gebildet ist, der außenumfangsseitig von einer Dichtung umschlossen ist, die dichtend an der Innenwand des Arbeitszylinders anliegt, würden diese kleinamplitudigen und höherfrequenten Schwingungen in die Dichtung übertragen und somit Komfortnachteile und höheren Dichtungsverschleiß verursachen.
Erst bei Einleitung von tieferfrequenten Schwingungen mit größerer Amplitude würde sich der Trennkolben phasenverschoben zu den eingeleiteten Schwingungen in axialer Richtung hin und her bewegen, wobei dazu, ausgehend vom im Arbeitszylinder relativ stillstehenden Trennkolben, zunächst die Haftreibung zwischen dem Arbeitszylinder und dem Trennkolben überwunden werden muss. Dieses Losbrechen des Trennkolbens aus seiner Ruheposition, bezogen auf den Arbeitszylinder, wirkt sich nachteilig auf das Ansprechverhalten und die Lebensdauer des Dämpfers aus, nämlich derart, dass sich kurzzeitig die Dämpfkraft erhöht, aber auch die axiale Kolbendichtung schneller verschleißt und somit zwischen Gas- und Ölraum nicht mehr zufriedenstellend abgedichtet wird.

Um diesen zuvor geschilderten Nachteil zu vermeiden, ist erfindungsgemäß die Membran vorgesehen, die zur Aufnahme der zuvor beschriebenen Schwingungen schwingfähig und flüssigkeitsdicht innerhalb des Führungsrings des Trennkolbens angeordnet ist.
Erst dann, wenn die Schwingungsamplituden größer werden, als zuvor beschrieben, und die Membran die eingeleiteten Schwingungen nicht mehr aufzunehmen vermag, bewegt sich der Trennkolben innerhalb des Arbeitszylinders in axialer Richtung hin und her.

Zur Führung des Trennkolbens innerhalb des Arbeitszylinders ist es vorgesehen, dass der Führungsring außenumfangsseitig eine Führungsfläche aufweist.
Der Führungsring kann zum Beispiel aus einem metallischen oder hartfesten Werkstoff bestehen.
Die außenumfangsseitige Führungsfläche des Führungsrings kann zum Beispiel mit einer reibungsverringernden Oberflächenbeschichtung und/oder mit einer reibungsverringernden Oberflächenprofilierung versehen sein, um stick-slip-Effekte während der bestimmungsgemäßen Verwendung des Trennkolbens auf ein Minimum zu reduzieren.
Reibungsverringernde Oberflächenbeschichtungen und/oder reibungsverringernde Oberflächenprofilierungen sind allgemein bekannt und können bedarfsweise vorgesehen werden.

Der Führungsring weist zwei Stirnseiten auf, wobei der Führungsring stirnseitig beiderseits mit jeweils zumindest einer sich in radialer Richtung nach außen erstreckenden Dichtlippe verbunden ist. Eine der Dichtlippen dichtet in einem solchen Fall dann das Gasreservoir, die andere Dichtlippe das Ölreservoir ab. Um eine ausreichend starke Anpressung der Dichtlippen in radialer Richtung an die Innenwand des Arbeitszylinders zu bewirken, weist der Führungsring stirnseitig beiderseits sich in axialer Richtung erstreckende Vorsprünge auf, die eine Armierung für die Dichtlippen bilden. Der Trennkolben weist dadurch gleichbleibend gute Gebrauchseigenschaften während einer langen Gebrauchsdauer auf; eine Relaxation der Dichtlippen ist dadurch praktisch ausgeschlossen.

Die Dichtlippen bestehen bevorzugt aus einem gummielastischen Werkstoff. Derartige Werkstoffe sind in der Dichtungstechnik allgemein bekannt. Der mit der Konstruktion von Dichtlippen betraute Fachmann kann aus einer Vielzahl von Werkstoffen den für den jeweiligen Anwendungsfall geeigneten Werkstoff aussuchen.

Gemäß einer vorteilhaften Ausgestaltung kann es vorgesehen sein, das die Membran und die Dichtlippen einstückig ineinander übergehend und materialeinheitlich ausgebildet sind. Hierbei ist von Vorteil, dass der Trennkolben einen einfachen und teilarmen Aufbau aufweist und dadurch fertigungstechnisch einfach und wirtschaftlich herstellbar ist.
Der zuvor beschriebene Trennkolben besteht aus nur zwei Teilen, nämlich aus dem Führungsring und einem gummielastischen Bauteil, das die Membran und die beiden Dichtlippen umfasst.

Die Membran kann ein sich in radialer Richtung erstreckendes, ebenes und kreisscheibenförmiges Zentrum aufweisen. Das kreisscheibenförmige Zentrum weist zur Aufnahme höherfrequenter und kleinamplitudiger Schwingungen eine ausgezeichnete Beweglichkeit in Richtung der eingeleiteten Schwingungen auf, so dass der Trennkolben während der Aufnahme der eingeleiteten Schwingungen innerhalb des Arbeitszylinders relativ zu diesem nicht in Bewegung gerät.

Weiter verbesserte Aufnahmeeigenschaften weist der Trennkolben auf, wenn die Membran rollbalgartig ausgebildet ist und zumindest eine in Umfangsrichtung umlaufende und in axialer Richtung offenen, C-förmige Falte aufweist, die das Zentrum außenumfangsseitig umschließt. Durch die C-förmige, rollbalgförmige Gestalt der Membran können bei der Aufnahme von Schwingungen gebrauchsdauerverringernde Zugspannungen innerhalb der Membran aus gummielastischem Werkstoff vermieden werden; die C-förmige, rollbalgförmige Falte bewirkt eine Abroll-Bewegung der Membran im Bereich der Falte bei Einleitung von Schwingungen in den Arbeitszylinder.

Es kann vorgesehen sein, dass das Verhältnis von größter Ausdehnung des Trennkolbens in axialer Richtung zu größter axialer Ausdehnung der Falte 1 bis 1,5 beträgt. Durch ein derartiges Verhältnis weist der Trennkolben einerseits kompakte Abmessungen in axialer Richtung auf und außerdem gleichbleibend gute Gebrauchseigenschaften bezüglich der Aufnahme von Schwingungen während einer langen Gebrauchsdauer.

Der Einrohr-Gasdruckstoßdämpfer, in dem der zuvor beschriebene Trennkolben zur Anwendung gelangt, umfasst einen Arbeitszylinder mit einem Gasreservoir und einem Ölreservoir, wobei das Gasreservoir und das Ölreservoir in axialer Richtung benachbart zueinander angeordnet und durch einen Trennkolben, wie zuvor beschrieben, mediumsdicht voneinander getrennt sind, wobei der Trennkolben im Arbeitszylinder mittels der Führungsfläche in axialer Richtung schwimmend geführt ist und wobei im Ölreservoir ein mit einer Kolbenstange ortsfest verbundener Arbeitskolben in axialer Richtung hin und her beweglich angeordnet ist.

### Kurzbeschreibung der Zeichnungen

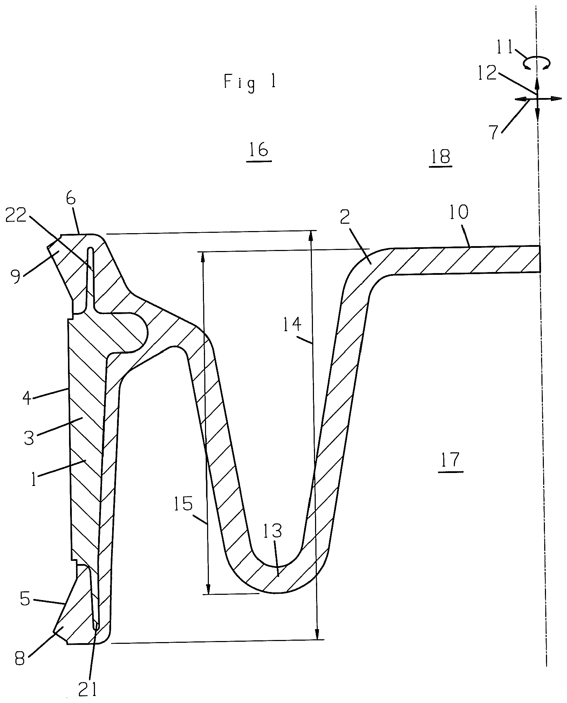

Ein Ausführungsbeispiel des erfindungsgemäßen Trennkolbens und ein Ausführungsbeispiel eines erfindungsgemäßen Einrohr-Gasdruckstoßdämpfers, in dem der erfindungsgemäße Trennkolben zur Anwendung gelangt, werden nachfolgend anhand der Figuren 1 und 2 näher erläutert.

Diese zeigen jeweils in schematischer Darstellung:
- Figur 1: ein Ausführungsbeispiel eines Trennkolbens,
- Figur 2: ein Ausführungsbeispiel eines Einrohr-Gasdruckstoßdämpfers, in dem der Trennkolben aus Figur 1 zur Anwendung gelangt.

### Ausführung der Erfindung

In Figur 1 ist ein Ausführungsbeispiel eines erfindungsgemäßen Trennkolbens gezeigt, der einen Stützkörper 1 aus einem zähharten Werkstoff umfasst. Der Stützkörper 1 ist als Führungsring 3 ausgebildet und umschließt die kreisförmig ausgebildete Membran 2, die aus einem gummielastischen Werkstoff besteht, außenumfangsseitig und dichtend.
Der Stützkörper 1 und die Membran 2 sind stoffschlüssig, zum Beispiel durch Vulkanisation, dichtend miteinander verbunden.

Der hier dargestellte Trennkolben hat einen besonders einfachen und teilarmen Aufbau. Der Führungsring 3 weist im Bereich seiner beiden Stirnseiten 5, 6 jeweils eine Armierung 21, 22 für die Dichtlippen 8, 9 auf, um diese während der bestimmungsgemäßen Verwendung des Trennkolbens auch während einer langen Gebrauchsdauer dichtend an der Innenwand des Arbeitszylinders 16 (vgl. Figur 2) zu halten. Die Armierungen 21, 22 sind durch sich in axialer Richtung 12 erstreckende Vorsprünge gebildet, die einstückig ineinander übergehend und materialeinheitlich mit dem Führungsring 3 ausgebildet sind.

Die Dichtlippen 8, 9 erstrecken sich in radialer Richtung 7 nach außen und sind einstückig ineinander übergehend und materialeinheitlich mit der Membran 2 ausgebildet. Die Membran 2 und die Dichtlippen 8, 9 bestehen im hier gezeigten Ausführungsbeispiel aus demselben gummielastischen Werkstoff.

Der gummielastische Werkstoff, aus die Membran 2 und die Dichtlippen 8, 9 bestehen, umschließt den Führungsring 3 - mit Ausnahme der Führungsfläche 4 - vollständig, so dass der Führungsring 3 vor einer Beaufschlagung mit abzudichtendem Medium bestens geschützt ist.

Die Membran 2 ist rollbalgförmig ausgebildet und umfasst eine in Umfangsrichtung 11 umlaufende und in axialer Richtung 12 offene, im Wesentlichen C-förmige Falte 13, die das sich in radialer Richtung 7 erstreckende, ebene und kreisscheibenförmige Zentrum 10 außenumfangsseitig umschließt.

Der Trennkolben weist kompakte Abmessungen in axialer Richtung 12 auf. Das Verhältnis von größter Ausdehnung 14 des Trennkolbens in axialer Richtung 12 zu größter axialer Ausdehnung 15 der Falte 13 beträgt im hier gezeigten Ausführungsbeispiel 1,2.

In Figur 2 ist ein Ausführungsbeispiel eines Einrohr-Gasdruckstoßdämpfers gezeigt. Dieser Einrohr-Gasdruckstoßdämpfer umfasst den Arbeitszylinder 16, wobei im Arbeitszylinder 16 das Gasreservoir 17 und das Ölreservoir 18 in axialer Richtung 12 benachbart zueinander angeordnet sind. In axialer Richtung 12 zwischen dem Gasreservoir 17 und dem Ölreservoir 18 ist der Trennkolben aus Figur 1 angeordnet, der die beiden Reservoirs 17, 18 mediumsdicht voneinander trennt. Der Trennkolben ist mittels seiner Führungsfläche 4 in axialer Richtung schwimmend an der Innenumfangswand des Arbeitszylinders 16 geführt.
Im Ölreservoir 18 ist ein mit einer Kolbenstange 19 ortsfest verbundener Arbeitskolben 20 in axialer Richtung 12 hin und her beweglich angeordnet.

Das Gasreservoir 17 dient zum Volumen- und Temperaturausgleich im Arbeitszylinder 16, wobei innerhalb des Arbeitszylinders 16 üblicherweise ein Basisinnendruck von etwa 20 bis 30 bar herrscht. Diese Vorspannung ist erforderlich, um zu verhindern, dass beim Einfedern die Ölsäule im Ölreservoir auf der dem Gasreservoir 17 axial abgewandten Seite des Arbeitskolbens 20 abreißt, dadurch Kavitation entsteht und die Gebrauchseigenschaften des Einrohr-Gasdruckstoßdämpfers nachteilig beeinflusst werden.

Beim Einfahren der Kolbenstange 19 und des ortsfest mit der Kolbenstange 19 verbundenen Arbeitskolbens 20 in das Ölreservoir 18 wird der Trennkolben axial in das Gasreservoir 17 verschoben, wodurch der Druck stirnseitig beiderseits des Trennkolbens - im Gasreservoir 17 und auch im Ölreservoir 18 - zunimmt. Das Gasreservoir 17 gleicht das Volumen der durch die Kolbenstange 19 und den Arbeitskolben 20 verdrängten Ölmenge durch Kompression aus. Gleichzeitig wird das Öl auf der dem Gasreservoir 17 zugewandten Seite des Arbeitskolbens 20 durch am/im Arbeitskolben 20 sitzende Dämpfungsventile hindurchgedrückt. Der hierdurch entstehende Widerstand erzeugt die Druckhubdämpfung bei Einrohr-Gasdruckstoßdämpfern. Aufgrund von Wärmeentwicklung durch die Dämpfung am Arbeitskolben 20 dehnt sich das Öl aus. Auch dieser Effekt wird durch das Volumen im Gasreservoir 17 ausgeglichen.

Beim Ausziehen der Kolbenstange 19 und des ortsfest damit verbundenen Arbeitskolbens 20 wird das Öl in umgekehrter Richtung durch die Dämpfungsventile am/im Arbeitskolben 20 hindurchgedrückt. Der hierbei entstehende Widerstand bildet die Zughubdämpfung des Einrohr-Gasdruckstoßdämpfers.

In manchen Betriebszuständen des Einrohr-Gasdruckstoßdämpfers soll vermieden werden, dass sich der Trennkolben in axialer Richtung 12 zwischen dem Gasreservoir 17 und dem Ölreservoir 18 hin und her bewegt. Ein solcher Betriebszustand liegt zum Beispiel dann vor, wenn höherfrequente und kleinamplitudige Schwingungen durch den Stoßdämpfer aufgenommen werden sollen. Das kann der Fall sein, wenn ein mit den Einrohr-Gasdruckstoßdämpfern ausgerüstetes Fahrzeug über eine Autobahn gefahren wird. In einem solchen Betriebszustand werden kleinamplitudige und höherfrequente Schwingungen in den Stoßdämpfer eingeleitet, die durch die Membran des erfindungsgemäßen Trennkolbens aufgenommen werden. Die Aufnahme erfolgt ausschließlich durch die Beweglichkeit der gummielastischen Membran; eine Bewegung des Führungsrings 3 relativ zum Arbeitszylinder 16 findet in einem solchen Betriebszustand nicht statt.
Hierbei ist von Vorteil, dass sich das Ansprechverhalten des Dämpfers und somit das Komfortempfinden im Fahrzeug verbessert, da bei kleinen Amplituden die Ausgleichsarbeit durch die Membrane erfolgt.
Außerdem erhöht sich dadurch auch die Lebensdauer der primären Kolbenabdichtung und die Kälteeigenschaften können durch Werkstoffe und entsprechende Geometrien der Primärdichtungen verbessert werden.

## Patentansprüche

1. Trennkolben, umfassend einen Stützkörper (1) aus einem zähharten Werkstoff und eine schwingfähige Membran (2) aus einem gummielastischen Werkstoff, die im Wesentlichen kreisförmig ausgebildet ist, wobei der Stützkörper (1) als Führungsring (3) ausgebildet ist, wobei der Führungsring (3) außenumfangsseitig eine Führungsfläche (4) aufweist, wobei der Führungsring (3) die Membran (2) außenumfangseitig und flüssigkeitsdicht umschließt und wobei der Führungsring (3) zwei Stirnseiten (5, 6) aufweist, **dadurch gekennzeichnet, dass** der Führungsring (3) stirnseitig beiderseits mit jeweils zumindest einer sich in radialer Richtung (7) nach außen erstreckenden Dichtlippe (8, 9) verbunden ist, dass der Führungsring (3) stirnseitig beiderseits jeweils eine Armierung (21, 22) für die Dichtlippen (8, 9) aufweist, und dass die Armierungen (21, 22) durch sich in axialer Richtung (12) erstreckende Vorsprünge gebildet sind.

2. Trennkolben nach Anspruch 1, **dadurch gekennzeichnet, dass** die Vorsprünge einstückig ineinander übergehend und materialeinheitlich mit dem Führungsring (3) ausgebildet sind.

3. Trennkolben nach einem der voranstehenden Ansprüche, **dadurch gekennzeichnet, dass** die Dichtlippen (8, 9) aus einem gummielastischen Werkstoff bestehen.

4. Trennkolben nach einem der voranstehenden Ansprüche, **dadurch gekennzeichnet, dass** die Membran (2) und die Dichtlippen (8, 9) einstückig ineinander übergehend und materialeinheitlich ausgebildet sind.

5. Trennkolben nach einem der voranstehenden Ansprüche, **dadurch gekennzeichnet, dass** die Membran (2) ein sich in radialer Richtung (7) erstreckendes, ebenes und kreisscheibenförmiges Zentrum (10) aufweist.

6. Trennkolben nach Anspruch 5, **dadurch gekennzeichnet, dass** die Membran (2) rollbalgartig ausgebildet ist und zumindest eine in Umfangsrichtung (11) umlaufende und in axialer Richtung (12) offene, C-förmige Falte (13) aufweist, die das Zentrum (10) außenumfangseitig umschließt.

7. Trennkolben nach einem der voranstehenden Ansprüche, **dadurch gekennzeichnet, dass** das Verhältnis von größter Ausdehnung (14) des Trennkolbens in axialer Richtung (12) zu größter axialer Ausdehnung (15) der Falte (13) 1 bis 1,5 beträgt.

8. Einrohr-Gasdruckstoßdämpfer, umfassend einen Arbeitszylinder (16) mit einem Gasreservoir (17) und einem Ölreservoir (18), wobei das Gasreservoir (17) und das Ölreservoir (18) in axialer Richtung (12) benachbart zueinander angeordnet und durch einen Trennkolben nach einem der Ansprüche 1 bis 7 mediumsdicht voneinander getrennt sind, wobei der Trennkolben im Arbeitszylinder (16) mittels der Führungsfläche (4) in axialer Richtung (12) schwimmend geführt ist und wobei im Ölreservoir (18) ein mit einer Kolbenstange (19) ortsfest verbundener Arbeitskolben (20) in axialer Richtung (12) hin und her beweglich angeordnet ist.

## Claims

1. Separating piston, comprising a supporting body (1) made from a hard and tough material and an oscillating diaphragm (2) made from an elastomeric material which is of substantially circular configuration, the supporting body (1) being configured as a guide ring (3), the guide ring (3) having a guide face (4) on the outer circumferential side, the guide ring (3) enclosing the diaphragm (2) on the outer circumferential side and in a liquid-tight manner and the guide ring (3) having two end sides (5, 6), **characterized in that** the guide ring (3) is connected on the end side on both sides to in each case at least one sealing lip (8, 9) which extends in the radial direction (7) to the outside, **in that** the guide ring (3) has, on the end side on both sides, in each case one reinforcement (21, 22) for the sealing lips (8, 9), and **in that** the reinforcements (21, 22) are formed by way of projections which extend in the axial direction (12).

2. Separating piston according to Claim 1, **characterized in that** the projections are configured so as to merge into one another in one piece and formed from the same material with the guide ring (3).

3. Separating piston according to one of the preceding claims, **characterized in that** the sealing lips (8, 9) consist of an elastomeric material.

4. Separating piston according to one of the preceding claims, **characterized in that** the diaphragm (2) and the sealing lips (8, 9) are configured from the same material and so as to merge integrally into one another.

5. Separating piston according to one of the preceding claims, **characterized in that** the diaphragm (2) has a planar and circular disc-shaped centre (10) which extends in the radial direction (7).

6. Separating piston according to Claim 5, **characterized in that** the diaphragm (2) is configured in the manner of a rolling bellows and has at least one C-shaped fold (13) which runs around in the circumferential direction (11), is open in the axial direction (12), and encloses the centre (10) on the outer circumferential side.

7. Separating piston according to one of the preceding claims, **characterized in that** the ratio of greatest extent (14) of the separating piston in the axial direction (12) to greatest axial extent (15) of the fold (13) is from 1 to 1.5.

8. Monotube gas-filled shock absorber, comprising a working cylinder (16) with a gas reservoir (17) and an oil reservoir (18), the gas reservoir (17) and the oil reservoir (18) being arranged adjacently with respect to one another in the axial direction (12) and being separated from one another in a medium-tight manner by way of a separating piston according to one of Claims 1 to 7, the separating piston being guided in a floating manner in the axial direction (12) in the working cylinder (16) by means of the guide face (4), and a working piston (20) which is connected in a stationary manner to a piston rod (19) being arranged in the oil reservoir (18) so as to be movable to and fro in the axial direction (12).

## Revendications

1. Piston de séparation, comprenant un corps de support (1) en un matériau dur et dense et une membrane vibrante (2) en matériau élastique caoutchouteux qui est sensiblement circulaire, le corps de support (1) étant conçu comme une bague de guidage (3), la bague de guidage (3) ayant une surface de guidage (4) sur la périphérie extérieure, la bague de guidage (3) enfermant la membrane (2) sur la périphérie extérieure et de manière étanche aux liquides et la bague de guidage (3) comportant deux faces frontales (5, 6), **caractérisé en ce que** la bague de guidage (3) est reliée à chacune des deux extrémités du côté frontal à au moins une lèvre d'étanchéité (8, 9) s'étendant vers l'extérieur dans la direction radiale (7), **en ce que** la bague de guidage (3) comporte à chacune des deux extrémités du côté frontal un renfort (21, 22) destiné aux lèvres d'étanchéité (8, 9) et **en ce que** les renforts (21, 22) sont formés par des saillies s'étendant dans la direction axiale (12).

2. Piston de séparation selon la revendication 1, **caractérisé en ce que** les saillies sont formées de manière à se fondre d'une seule pièce les unes dans les autres et en une seule matière avec la bague de guidage (3) .

3. Piston de séparation selon l'une des revendications précédentes, **caractérisé en ce que** les lèvres d'étanchéité (8, 9) comprennent un matériau élastomère.

4. Piston de séparation selon l'une des revendications précédentes, **caractérisé en ce que** la membrane (2) et les lèvres d'étanchéité (8, 9) sont formées en une seule matière et de manière à se fondre d'une seule pièce l'une dans l'autre.

5. Piston de séparation selon l'une des revendications précédentes, **caractérisé en ce que** la membrane (2) comporte un centre plat (10) en forme de disque circulaire qui s'étend dans la direction radiale (7) .

6. Piston de séparation selon la revendication 5, **caractérisé en ce que** la membrane (2) est conçue comme un soufflet à roulement et comporte au moins un pli (13) en forme de C qui s'étend dans la direction périphérique (11), qui est ouvert dans la direction axiale (12) et qui enferme le centre (10) sur la périphérie extérieure.

7. Piston de séparation selon l'une des revendications précédentes, **caractérisé en ce que** le rapport de la plus grande étendue (14) du piston de séparation dans la direction axiale (12) à la plus grande étendue axiale (15) du pli (13) est de 1 à 1,5.

8. Amortisseur de coup de bélier monotube, comprenant un cylindre de travail (16) muni d'un réservoir de gaz (17) et d'un réservoir d'huile (18), le réservoir de gaz (17) et le réservoir d'huile (18) étant disposés l'un à côté de l'autre dans la direction axiale (12) et étant séparés l'un de l'autre de manière étanche au milieu par un piston de séparation selon l'une des revendications 1 à 7, le piston de séparation étant guidé de manière flottante dans la direction axiale (12) dans le cylindre de travail (16) au moyen de la surface de guidage (4) et un piston de travail (20), qui est relié de façon fixe à une tige de piston (19), étant disposé dans le réservoir d'huile (18) de façon à être mobile suivant un mouvement alternatif dans la direction axiale (12).
